# EUROPEAN PATENT SPECIFICATION

(11) **EP 0 919 442 B1**
(45) Date of publication and mention of the grant of the patent: **07.06.2006**
(21) Application number: 98309732.0
(22) Date of filing: 26.11.1998
(51) Int. Cl.: B60R 25/10

(54) **Security system**
Sicherheitssystem
Système de sécurité

(30) Priority: 27.11.1997 GB 9725168
(43) Date of publication of application: 02.06.1999
(73) Proprietor: Celestica Limited, Stoke-on-Trent, Staffs. ST7 1TL (GB)
(72) Inventor: Gilbert, Wayne, Stone, Staffs. (GB)
(74) Representative: McLeish, Nicholas Alistair Maxwell

(56) References cited:
- EP-A- 0 242 099
- EP-A- 0 770 749
- WO-A-97/24005
- GB-A- 2 274 188
- GB-A- 2 305 285
- US-A- 5 334 974
- US-A- 5 515 043

## Description

The present invention generally relates to a security system for a transportable asset. In particular, the present invention relates to a security system for a transportable asset which can be used to automatically detect that an unauthorised person has moved or attempted to move the asset and then to automatically issue an informatory signal relating to this occurrence, detailing the asset's location.

Location devices for vehicles that have been stolen are becoming common. For instance, in the United Kingdom the Tracker^{™} system is increasingly being used to identify the location of stolen vehicles such as cars.

When a car with the Tracker^{™} system installed is stolen, the owner telephones a control centre and alerts the control centre that his/her car is missing. The car has a transponder unit installed. The control centre then transmits a radio frequency signal to activate the transponder situated in the missing vehicle. The transponder unit is actuated to transmit a second radio frequency signal which may be detected by a number of Tracker receiving units. The location of the transponder (and hence the stolen vehicle) may then be determined using conventional triangulation techniques. Using this information, the vehicle may then be recovered.

Such a system as described above possesses several disadvantages. Firstly, it may be an appreciable period of time before it is realised that the vehicle has been stolen, for example, if the owner does not frequently use the vehicle or, alternatively, if the owner has gone on holiday. This may give sufficient time for the thief to deactivate the transponder unit within the vehicle, and hence prevent the location of the vehicle.

Secondly, this location system uses a dedicated proprietary radio transmitter/receiver system for location of the vehicle. In order to successfully locate a stolen vehicle by triangulation, a network of radio signal receiver units must be installed. To install and maintain such a system covering a large area is an expensive and time consuming operation. Should such a large area network not be installed,it would be possible for car thieves to evade detection simply by moving the stolen car to an area where the coverage of the radio receivers is inadequate to permit triangulation of the position of the vehicle and its subsequent location. Additionally, the use of such a system for other vehicles such as boats leads to problems in installing and maintaining radio transmitter/receiver networks on any body of water.

EP-A-0, 242, 099 discloses an anti-theft and locating system according to the preamble of Claim 1. The system alerts a central dispatch office when it senses unauthorised access to a vehicle, or unauthorised movement of the vehicle, determined using positional coordinates from the Navstar GPS. The central dispatch office may also interrogate the system, by addressing its unique serial number.

It is an object of the present invention to address the above problems.

According to the first aspect of the present invention, there is provided a security system for a transportable asset as set out in claim 1.

The present invention may thus automatically detect any one of a number of predetermined actions which might affect the security of the asset and, if no authorisation signal has been received, the asset unit will automatically transmit a signal indicating that an unauthorised action is occurring.

Such apparatus also allows handshake signalling to be performed automatically between the authorisation unit and the asset unit without any action by the authorised user.

Preferably the security system further comprises a tracking unit located remote from said asset for monitoring the status and position of said asset, said tracking unit comprising a position receiver means for receiving said determined position and, acting in a predetermined manner upon reception of said authorisation signal.

The tracking unit may then be used to take appropriate action in the event of the asset being stolen, e.g. alerting police or the owner of the vehicle, without alerting the thieves that the theft of the vehicle has been detected.

Preferably, the position transmitter means and/or said position receiver means comprise mobile telephone units.

The security system may thus make use of a comprehensive network for communication, and such a network may also be used for location of the asset unit if desired using the transmission strengths from the asset unit to the local receivers or, alternatively from the local transmitters to the asset unit. Such a communication system also permits normal telephone and facsimile transmissions to be sent and received from the asset unit.

Preferably, the authorisation signal generator means is adapted to generate a rolling code type signal.

Such an algorithmic code encryption technique is used for increased security, and makes difficult the grabbing and subsequent reproduction of the signal by an unauthorised user. The unit may further be adapted to make use of other anti-grabbing techniques such as, if an incorrect authorisation signal is received by the asset unit, the asset unit sending an alarm signal to a remote centre (eg. a tracking unit) and/or only accepting a limited number of authorisation signal transmission attempts in a predetermined period of time. Such techniques are commonly used to prevent people "cracking" the codes on security systems.

Preferably, the sensor means includes a memory unit for storing at regular intervals said determined position, the actuation means being adapted to actuate the transmitter to transmit a signal indicative of the determined position of said asset if the sensor means detects that the current determined position has changed from the stored determined position in the absence of said authorisation signal.

An unauthorised movement of the vehicle may thus be easily detected.

The information identifying the position of the asset may be regularly updated, so that if the asset is stolen, the last known position of the asset is accurately stored on the authorisation unit for future reference and subsequent retrieval. This may be used to overcome the problem of user's forgetting where they have placed their assets eg. car owners forgetting where they have parked their cars. Preferably, the sensor means is adapted to monitor an engine management system of the transportable asset and to sense if an engine controlled by said engine management system is actuated.

Preferably, the sensor means comprises a passive infra-red detector for detecting if a person is in said asset or in proximity to said asset.

Preferably, the sensor means comprises an ultrasonic detector for detecting if a person is in said asset or in proximity to said asset.

Preferably, the sensor means includes a CCD camera for recording an imagine of a person located in, or in proximity to, said asset.

The images of any thief may thus be recorded and, if preferred, transmitted to a remote location, for future identification purposes.

Preferably, the user authorisation unit further comprises a panic actuating and transmission means for actuation by a user to transmit a signal to said asset unit indicating that said user is in difficulty, said asset unit being further adapted to receive said panic signal with said actuation means being adapted for actuating said position transmitter means to transmitter signal indicative of the determined position of said asset if said difficulty signal has been received.

The authorisation unit may thus comprise one or more "panic" buttons, which may be activated if the bearer finds him or herself in difficulty e.g. under threat of violence or simply having problems with the vehicle.

Preferably, the asset unit further comprises a microphone and a speaker to enable the use of said mobile telephone units as a conventional telephone by the user of said asset.

Preferably, the asset unit further comprises input means for control and re-programming of the functions of the asset unit.

Preferably, the input means includes a personal digital assistant with a touch sensitive screen.

Such a touch sensitive display provides intuitive style programming of the asset unit. The user may then set the functions of the asset unit as appropriate for any particular time or circumstances.

Preferably, the tracking unit further comprises a transmitter means to transmit an instructional signal to said asset unit; said asset unit signal receiver means is adapted to receive said instructional signal; and said asset unit is adapted to respond in a predetermined manner to said instructional signal.

The asset unit may thus be reprogrammed as required. For instance, should the asset be a vehicle which has broken down, the user might inform the tracking unit remote centre that this has happened, and request that the asset unit is deactivated and/or some of its alarm functions disabled or ignored. Alternatively, if the asset is stolen, the tracking unit may be used to take whatever action the user/owner of the asset or the operator of the tracking unit considers appropriate e.g. disablement of the engine management system.

Preferably, the security system further comprises a position store means adapted to store the determined position of said asset at regular time and/or distance intervals.

The security system may thus be used to keep a record of the position of the asset. Such a record may be kept by the asset unit or remote from the asset unit. Such a record would permit the owner of the asset to track the assets movement over a period of time.

For instance, if the asset is a hire vehicle, the owners might accurately track the distance and areas to which the vehicle has been driven, with this system preventing clocking occurring. Preferential hire rates may thus be applied dependent upon the areas in which the vehicle travels e.g. if the area is not of rough terrain or a high risk crime area or an area busy in traffic in which an accident is more likely to occur. On a similar note, such a technique might used by an insurance company who may wish to vary their insurance charges for an asset such as a vehicle, dependent upon which areas the vehicle travels within.

According to a second aspect of the present invention, there is provided a method of operating a security system for a transportable asset as set out in claim 19.

Preferably, the possible pre-programmed conditions include
(i) movement of the asset,
(ii) operation of the asset,
(iii)detection of a person in, on or in the vicinity of the asset, and/or
(iv) activation of the user authorisation unit by a user to transmit a signal identifying that the user is in difficulty.

Preferred examples of the invention will now be described with reference to the accompanying drawings in which:
Figure 1 is a schematic diagram of a security system in accordance with a first embodiment of the present invention; and
Figure 2 is a schematic diagram of a security system in accordance with a second embodiment of the present invention.

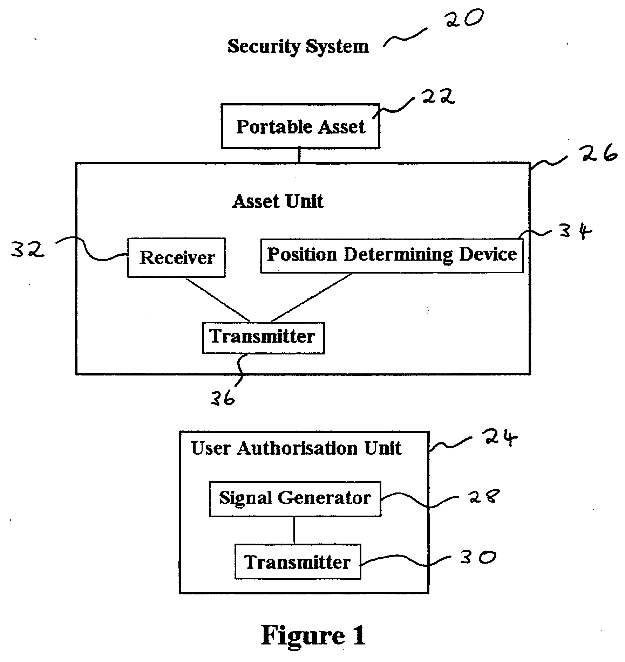

In Figure 1, a security system 20 for a portable asset 22, such as a vehicle, includes a user authorisation unit 24 for identifying that the person carrying the unit is an authorised user, and an asset unit 26 mounted on or in the vehicle for monitoring the position of the vehicle and whether or not the person moving the vehicle is authorised to do so.

The user authorisation unit 24 includes an authorisation signal generator 28 and a transmitter 30 for respectively generating and transmitting a signal identifying the bearer of the unit to be an authorised person. It will be appreciated that the authorisation signal may take any one of a number of forms. For instance, the authorisation signal might be an acoustic signal, for example an ultrasonic signal, or alternatively an electro-magnetic radiation signal e.g. infra-red or radio frequency. The transmitted signal may be analogue or digital, and may simply consist of a pulse or series of pulses.

In a preferred embodiment the authorisation signal will include the use of "rolling code" techniques whereby the authorisation signal is generated by algorithmic code encryption, a technique which is becoming widely used and offers a relatively high level of security. The authorisation signal may contain a unique identity code linking the authorisation unit 24 to a particular asset unit 26 or set of asset units.

The authorisation signal is only transmitted when the user authorisation user 24 is in proximity with the asset unit 26. For instance, the asset unit 26 might transmit a "handshake" signal which is received by the authorisation unit 24 and initiates the generation and transmission of the authorisation signal.

Preferably the authorisation unit 24 is convenient for carrying and, for example, might take the form of a key fob or identification badge which might be worn by the authorised user.

The asset unit 26 includes a receiver 32 for receiving the authorisation signal, a device 34 for calculating the position of the vehicle using radio frequency location techniques and a transmitter 36 for transmission of details of its identification and location in the event of a theft or unauthorised use of the vehicle.

The transmitter 36 may be a proprietary system, or alternatively may simply be a standard GSM telephone module in combination with a processing unit for detection of vehicle theft and/or unauthorised movement of the vehicle.

The location device may make use of a similar proprietary system to the Tracker^{™} system for location of the position of the vehicle. Alternatively, the position of the vehicle may be calculated using a GSM telephone network system, from the signal strengths from the unit and local receiving units, with calculation of the actual position either being calculated using an on-vehicle processing unit, or alternatively, calculated remote from the vehicle and transmitted to the vehicle using the GSM network.

Preferably, the position of the vehicle will be calculated using a Global Positioning System (GPS) unit on the basis of transit times of signals from satellites, possibly in conjunction with reference signals from local ground station transmitters.

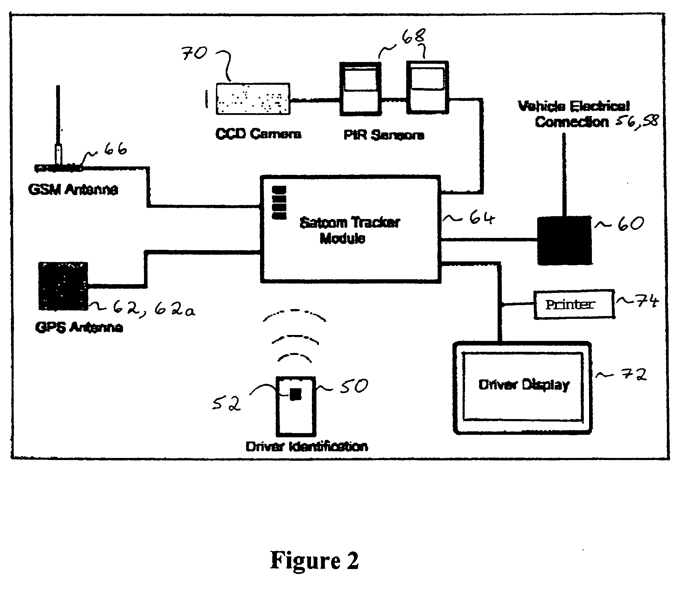

Figure 2 shows a preferred embodiment of the security system located in a vehicle. The driver identification unit 50 consists of a transponder unit mounted in a key fob. A panic button 52 is mounted in the key fob device for triggering the transponder unit to transmit an "anti-hijack" signal.

Proximity of the transponder unit to the vehicle is detected by the vehicle mounted asset unit 54. The vehicle mounted asset unit 54 continuously broadcasts a low power radio transmission which, when detected by the transponder unit, activates the transponder unit to transmit an authorisation signal.

The asset unit 54 has various electrical connections 56, 58 to the vehicle 60. Such electrical connections 56, 58 may be used to power the asset unit 54. Additionally, the asset unit 54 may contain a battery system for protecting system information in volatile memory for a period of time e.g. one year after disconnection from the main vehicle supply. The asset unit 54 will be designed to withstand the electrical environment common to road vehicles, including alternator load dump transients.

The electrical connections 56 58 may additionally be linked into the engine management system of the vehicle in order to monitor and/or control the operation of the vehicle such as the engine, the braking system and/or the central locking system.

A Global Positioning System 62 is used to provide latitude and longitude information for the surveillance device 54. The GPS may use a 1.5 GHz radio receiver 62A to detect the signals from the satellites. A computing unit, for example a 32 bit FT-20GP1 microprocessor 64, may be used to perform the mathematical part of the position calculation, in addition to controlling the local vehicle supervision and driver interface.

A GSM telephone system 66 provides facilities for data exchanges between the unit 54 and a remote location eg. the owner or a control centre via the cellular telephone network. Using such a telephone system, a range of additional facilities from facsimile to full speech transmissions are available.

Additionally, sensors may be added to the unit 54 to provide alarm functions to protect against theft and detect or store an image of anyone who has accessed the interior of the vehicle. Such sensors might include passive infrared (PIR) sensors 68, ultrasonic sensors (not shown), pressure sensors (not shown) and/or a CCD camera 70.

Such a CCD camera 70 may additionally be used to transmit visual images of the driver in conjunction with a normal audio telephone signal using the GSM system to provide audio visual communications.

The asset unit 54 may also be provided with an interface to a driver display unit 72 and/or a printer for, for example, displaying facsimile or electronic mail messages, or images 74 to display the condition of the security system. Preferably, the driver display unit 72 will also include a computer unit for control of the security system and its auxiliary features by the computer unit input means.

In a preferred embodiment, the driver display unit is in the form of a personal digital assistant (PDA) with a touch sensitive screen eg a US Robotics Palm Pilot^{™}. Such a PDA allows the vehicle operator to easily control the range of facilities and features of the system, such as dialling a number or accepting a call or message, simply by touching an area of the PDA screen. In this particular preferred embodiment, the US Robotics Palm Pilot^{™} unit is designed to be removable from the vehicle.

From the above description, it will be apparent that the security system may be operated in a number of modes. For instance, the vehicle unit may continuously broadcast an enquiry signal at low power for detection and subsequent response by the transponder in the key fob whenever the key fob is in range. Alternatively, the vehicle unit may only transmit such a signal when it detects an action which might effect the security of the vehicle eg. a person approaching the vehicle, the doors of the vehicle being opened, the engine of the vehicle being started, or (using the position sensing means or information from the engine management system) the fact that the vehicle is being moved. If no response is received from the transponder unit on such an occurrence, the vehicle mounted unit 54 may then be programmed to perform a number of actions.

For instance, the vehicle unit may be programmed to simply disable the engine of the vehicle. Additionally, the unit may be programmed to dial a remote control centre identifying the occurrence, the position of the vehicle as derived by the onboard GPS, and identifying the vehicle unit. In this preferred embodiment the user id of the unit may simply be the GSM SIM card code which is allocated at manufacture.

The control centre may then clarify whether or not the user of the vehicle has authorised such an occurrence. For instance, if the vehicle containing the security device were to break down, the user might inform the control centre that his/her vehicle was to be moved without the transponder unit being in proximity.

If the occurrence is unauthorised, the remote station might then take appropriate action eg. alerting the owner, police and/or instructing the vehicle unit to take appropriate action such as disabling the vehicle's engine management system at the next appropriate moment.

For instance, the engine management system might be used to disable the engine next time the engine is switched off. The vehicle unit may issue a visual or audible signal warning the driver that this action is to be/has been taken.

In all of the above instances, the action taken by the vehicle unit may be done covertly ie. without any indication to the vehicle occupants that such an action as informing a remote centre of the vehicle theft, or disablement of the vehicle's engine is occurring.

Alternatively, the vehicle unit may be programmed to issue any preferred audible and/or visual signals desired. For instance, such signals may be used for warning vehicle occupants or bystanders that an unauthorised action has occurred. Such signals may also be instructional, informing the occupants/unauthorised user of the actions that should be taken to gain authorisation and/or the possible consequences of unauthorised use.

Such signals may be of a sequence that is preprogrammed into the vehicle unit, or may be transmitted to the unit from a remote control centre or remote user.

General programming of the functions and responses of the security system, and in particular the asset unit, may similarly be transmitted to the vehicle, or may be performed locally using the onboard computing unit (e.g.PDA).

Preferably, the security system is constructed in a modular form, permitting easy installation of each or any preferred combination of the module units that comprise the asset unit. However, it is equally apparent that the various parts of the system in Figure 2, for example, could be integrated into a single I.C. or module if size is of concern.

The various embodiments described above use an authorization unit which would typically be carried by a user in the form of a key fob or the like. However, a further application of the device is envisaged in the transport industry to monitor the theft of trailers on an articulated truck.

In the proposed application, the asset unit 26 is mounted in or upon the cab of a tractor unit. Thus, the tractor unit is protected from theft by the techniques described above. However, it is desirable also to protect a trailer attached to the tractor unit, to prevent the trailer being detached from the tractor unit and towed away.

To address this, rather than using a hand-held authorization unit, an authorization unit can instead be attached to the trailer. This authorization unit will have similar features to the authorization unit described above. It is preferred, however, that the authorization unit be relatively small, robust and self-powered. An antenna of physically small proportions is also desirable, to make the authorization unit when mounted upon the trailer relatively unobtrusive. A low duty cycle transmission from the authorization unit to the asset unit is used, resulting in a long battery life of the authorization unit.

A continuous signal (including a suitable security protocol such as has been described above) thus passes between the authorization unit and the asset unit when each are enabled. If the trailer is removed from the tractor unit, the asset unit stops receiving this signal, which triggers the asset unit to transmit a signal via the cellular telephone network.

No wiring or other physical connection is needed between the tractor unit and trailer. Furthermore, using a globally licence-free frequency to transmit between the tractor unit and trailer, a single device type may be developed for application in all geographies, thus minimizing difficulties arising from cross border transport.

Whilst the above security system has been described in reference to a vehicle, it would be appreciated by a skilled person that a similar system, may be used in conjunction with any movable asset e.g. boat, aeroplane, machinery or jewellery. Indeed, the device finds particular application in vending machines, where unauthorized access or vandalism can be reported automatically (via a cellular network) to a central monitoring station. Furthermore, theft of such a machine can be tracked in a similar manner to theft of a vehicle, as described above.

## Claims

1. A security system (20) for a vehicle (22, 60) comprising a user authorisation unit (24, 50) for identifying that a person is an authorised user of said, and an vehicle unit (26, 54) located in fixed relation to said vehicle;
said user authorisation unit (24, 50) comprising authorisation signal generator means (28) for generating an authorisation signal, and authorisation signal transmitter means (30) for transmitting said authorisation signal; and
said vehicle unit (26, 54) comprising signal receiver means (32) for receiving said authorisation signal, position determination means (34) for determining the position of said vehicle (22, 60), position transmitter means (36) for transmitting a signal indicative of the determined position of said vehicle, and sensor means (64, 68, 70) for sensing if a predetermined action is performed on said vehicle; and actuation means for actuating said position transmitter means (36) to transmit a signal indicative of the determined position of said vehicle (22, 60) if said predetermined action has been performed in the absence of said authorisation signal,
**characterised in that** said vehicle unit (26, 54) further comprises an interrogating signal generator means for generating an interrogatory signal and an interrogating signal transmitter means for transmitting said interrogating signal; and
said user authorisation unit (24, 50) comprises an interrogating signal receiver means for receiving said interrogating signal, the authorisation signal generating means (28) being adapted to generate said authorisation signal upon receipt of said interrogating signal by said interrogating signal receiver,
wherein said interrogating signal transmitter means of said vehicle unit (26, 54) is adapted to transmit a signal identifying the determined position of the vehicle (22, 60); the interrogating signal receiver means of said user authorisation unit (24, 50) is adapted to receive said determined position identifying signal; and said user authorisation unit further comprises a position memory means for storing said determined position of said vehicle.

2. The security system (20) of claim 1, further comprising a tracking unit located remote from said vehicle (22, 60) for monitoring the status and position of said vehicle, said tracking unit comprising a position receiver means for receiving said determined position and means for acting in a predetermined manner upon reception of said authorisation signal.

3. The security system (20) of claim 1 or claim 2, wherein said position determination means (34) comprises a Global Positioning System (62) for determining the position of the vehicle (22, 60) from the transit times of signals from satellites.

4. The security system (20) of any of the above claims wherein said position transmitter means (36) and/or said position receiver means comprise mobile telephone units.

5. The security system (20) of any of the above claims, wherein said authorisation signal generator means (28) is adapted to generate a rolling code type signal.

6. The security system (20) of any of the above claims, wherein said sensor means (64, 68, 70) includes a memory unit for storing at regular intervals said determined position, the actuation means being adapted to actuate the transmitter (36) to transmit a signal indicative of the determined position of said vehicle (22, 60) if the sensor means detects that the current determined position has changed from the stored determined position in the absence of said authorisation signal.

7. The security system (20) of any of the above claims, wherein said sensor means (64, 68, 70) is adapted to monitor an engine management system of the vehicle (22, 60) and to sense if an engine controlled by said engine management system is actuated.

8. The security system (20) of any of the above claims, wherein said sensor means (64, 68, 70) comprises a passive infra-red detector (68) for detecting if a person is in said vehicle (22, 60) or in proximity to said vehicle.

9. The security system (20) of any of the above claims, wherein said sensor means (64, 68, 70) comprises an ultrasonic detector for detecting if a person is in said vehicle (22, 60) or in proximity to said asset.

10. The security system (20) of any of the above claims, wherein said sensor means (64, 68, 70) includes a CCD camera (70) for recording an image of a person located in, or in proximity to, said vehicle (22, 60).

11. The security system (20) of any of the above claims, wherein said user authorisation unit (24, 50) further comprises a panic actuating and transmission means (52) for actuation by a user to transmit a signal to said vehicle unit (26, 54) indicating that said user is in difficulty,
said vehicle unit being further adapted to receive said difficulty signal with said actuation means being adapted for actuating said position transmitter means (36) to transmit a signal indicative of the determined position of said vehicle (22, 60) if said difficulty signal has been received.

12. The security system (20) of claim 4, wherein said vehicle unit (26, 54) further comprises a microphone and a speaker to enable the use of said mobile telephone units as a conventional telephone by the user of said vehicle (22, 60).

13. The security system (20) of any of the above claims, wherein said vehicle unit (26, 54) further comprises input means (72) for control and reprogramming of the functions of the vehicle unit.

14. The security system (20) of claim 13, wherein said input means (72) includes a personal digital assistant with a touch sensitive screen.

15. The security system (20) of claim 2, wherein said tracking unit further comprises a transmitter means to transmit an instructional signal to said vehicle unit (26, 54);
said vehicle unit signal receiver means (32) is adapted to receive said instructional signal; and
said vehicle unit (26, 54) is adapted to respond in a pre-determined manner to said instructional signal.

16. The security system (20) of any of the other claims, wherein said security system further comprises a position store means adapted to store the determined position of said vehicle (22, 60) at regular time and/or distance intervals.

17. A vehicle (22, 60) incorporating the security system (20) as claimed in any of the above claims.

18. A method of operating a security system (20) for a vehicle (22, 60), the security system comprising a security system as claimed in any of the above claims; the method comprising the steps of
determining the location of the vehicle (22, 60) using position determination means (34);
receiving and storing the determined position of the vehicle (22, 60) at the user authorisation unit (24, 50);
transmitting an interrogating signal from the vehicle unit (26, 54) ;
upon receipt of the interrogating signal, generating the authorisation signal from the user authorisation unit (24, 50);
the vehicle unit (26, 54) determining that if a pre-programmed condition has been sensed, and the vehicle unit has not received the authorisation signal then an unauthorised person is performing an unauthorised action; and
the vehicle unit (26, 54) transmitting a signal identifying the determined location of the vehicle (22, 60) and indicating that the unauthorised action is occurring.

19. The method of operating a security system as claimed in claim 19, wherein the possible preprogrammed conditions include
(i) movement of the vehicle (22,60),
(ii) operation of the vehicle,
(iii)detection of a person in, on or in the vicinity of the vehicle, and/or
(iv) activation of the user authorisation unit (24, 50) by a user to transmit a signal identifying that the user is in difficulty.

## Patentansprüche

1. Sicherheitssystem (20) für ein Fahrzeug (22, 60), umfassend eine Nutzerberechtigungseinheit (24, 50) zum Identifizieren einer Person als berechtigter Nutzer des Fahrzeugs und eine Fahrzeugeinheit (26, 54), welche in fester Verbindung mit dem Fahrzeug vorliegt,
wobei die Nutzerberechtigungseinheit (24, 50) ein Berechtigungssignal-Erzeugungsmittel (28) zum Erzeugen eines Berechtigungssignals und ein Berechtigungssignal-Übermittlungsmittel (30) zum Übermitteln des Berechtigungssignals umfasst; und
wobei die Fahrzeugeinheit (26, 54) umfasst: ein Signal-Empfängermittel (32) zum Empfangen des Berechtigungssignals, ein Positionsbestimmungsmittel (34) zum Bestimmen der Position des Fahrzeugs (22, 60), ein Positionsübermittlungsmittel (36) zum Übermitteln eines Signals, das die bestimmte Position des Fahrzeugs anzeigt, und ein Sensormittel (64, 68, 70) zum Erfassen, ob eine vorbestimmte Aktion an dem Fahrzeug durchgeführt wird;
und ein Betätigungsmittel zum Betätigen des Positionsübermittlungsmittels (36) zum Übermitteln eines Signals, das die bestimmte Position des Fahrzeugs (22, 60) anzeigt, wenn die vorbestimmte Aktion in Abwesenheit des Berechtigungssignals durchgeführt worden ist,
**dadurch gekennzeichnet, dass** die Fahrzeugeinheit (26, 54) ferner ein Abfragesignal-Erzeugungsmittel zum Erzeugen eines Abfragesignals und ein Abfragesignal-Übermittlungsmittel zum Übermitteln des Abfragesignals umfasst; und
wobei die Nutzerberechtigungseinheit (24, 50) ein Abfragesignal-Empfängermittel zum Empfangen des Abfragesignals umfasst, wobei das Berechtigungssignal-Erzeugungsmittel (28) dafür ausgelegt ist, das Berechtigungssignal beim Empfang des Abfragesignals durch den Abfragesignal-Empfänger zu erzeugen,
wobei das Abfragesignal-Übermittlungsmittel der Fahrzeugeinheit (26, 54) dafür ausgelegt ist, ein Signal zu übermitteln, das die bestimmte Position des Fahrzeugs (22, 60) identifiziert; wobei das Abfragesignal-Empfängermittel der Nutzerberechtigungseinheit (24, 50) dafür ausgelegt ist, das Identifizierungssignal für die bestimmte Position zu empfangen; und wobei die Nutzerberechtigungseinheit ferner ein Positionsspeichermittel zum Speichern der bestimmten Position des Fahrzeugs umfasst.

2. Sicherheitssystem (20) nach Anspruch 1, welches ferner eine von dem Fahrzeug (22, 60) entfernt angeordnete Verfolgungseinheit zum Überwachen des Status und der Position des Fahrzeugs umfasst, wobei die Verfolgungseinheit ein Positionsempfängermittel zum Empfangen der bestimmten Position und ein Mittel zum Agieren in einer vorbestimmten Weise beim Empfang des Berechtigungssignals umfasst.

3. Sicherheitssystem (20) nach Anspruch 1 oder Anspruch 2, wobei das Positionsbestimmungsmittel (34) ein Globales Positionsbestimmungssystem (62) zum Bestimmen der Position des Fahrzeugs (22, 60) durch die Laufzeiten der Signale von Satelliten umfasst.

4. Sicherheitssystem (20) nach einem der vorangehenden Ansprüche, wobei das Positionsübermittlungsmittel (36) und/oder das Positionsempfängermittel Mobiltelefoneinheiten umfassen.

5. Sicherheitssystem (20) nach einem der vorangehenden Ansprüche, wobei das Berechtigungssignal-Erzeugungsmittel (28) dafür ausgelegt ist, ein Signal vom Typ,Rollierender Code' zu erzeugen.

6. Sicherheitssystem (20) nach einem der vorangehenden Ansprüche, wobei das Sensormittel (64, 68, 70) eine Speichereinheit zum Speichern der bestimmten Position in regelmäßigen Abständen umfasst, wobei das Betätigungsmittel dafür ausgelegt ist, den Übermittler (36) zu betätigen, um ein Signal zu übermitteln, das die bestimmte Position des Fahrzeugs (22, 60) anzeigt, wenn das Sensormittel entdeckt, dass sich die derzeitige bestimmte Position im Vergleich zu der gespeicherten bestimmten Position in Abwesenheit des Berechtigungssignals verändert hat.

7. Sicherheitssystem (20) nach einem der vorangehenden Ansprüche, wobei das Sensormittel (64, 68, 70) dafür ausgelegt ist, ein Motorsteuerungssystem des Fahrzeugs (22, 60) zu überwachen und zu erfassen, ob ein durch das Motorsteuerungssystem gesteuerter Motor betätigt wird.

8. Sicherheitssystem (20) nach einem der vorangehenden Ansprüche, wobei das Sensormittel (64, 68, 70) einen passiven Infrarotdetektor (68) umfasst, um zu erkennen, ob sich eine Person in dem Fahrzeug (22, 60) oder in der Nähe des Fahrzeugs befindet.

9. Sicherheitssystem (20) nach einem der vorangehenden Ansprüche, wobei das Sensormittel (64, 68, 70) einen Ultraschalldetektor umfasst, um zu erkennen, ob sich eine Person in dem Fahrzeug (22, 60) oder in der Nähe des Fahrzeugs befindet.

10. Sicherheitssystem (20) nach einem der vorangehenden Ansprüche, wobei das Sensormittel (64, 68, 70) eine CCD-Kamera (70) zum Aufzeichnen eines Bildes einer Person umfasst, welche sich in oder in der Nähe des Fahrzeugs (22, 60) befindet.

11. Sicherheitssystem (20) nach einem der vorangehenden Ansprüche, wobei die Nutzerberechtigungseinheit (24, 50) ferner ein Panikbetätigungs- und Übermittlungsmittel (52) zur Betätigung durch einen Nutzer umfasst, um ein Signal zu der Einheit (26, 54) zu übermitteln, das anzeigt, dass sich der Nutzer in einer Notsituation befindet,
wobei die Einheit ferner dafür ausgelegt ist, dieses Notsignal zu empfangen,
wobei das Betätigungsmittel dafür ausgelegt ist, das Positionsübermittlungssignal (36) zu betätigen, um ein Signal zu übermitteln, das die bestimmte Position des Fahrzeugs (22, 60) anzeigt, wenn das Notsignal empfangen worden ist.

12. Sicherheitssystem (20) nach Anspruch 4, wobei die Einheit (26, 54) ferner ein Mikrofon und einen Lautsprecher umfasst, um die Nutzung der Mobiltelefoneinheiten als konventionelles Telefon durch den Nutzer des Fahrzeugs (22, 60) zu ermöglichen.

13. Sicherheitssystem (20) nach einem der vorangehenden Ansprüche, wobei die Einheit (26, 54) ferner ein Eingangsmittel (72) zur Steuerung und Neuprogrammierung der Funktionen der Fahrzeugeinheit umfasst.

14. Sicherheitssystem (20) nach Anspruch 13, wobei das Eingangsmittel (72) einen PDA mit einem berührungsempfindlichen Bildschirm umfasst.

15. Sicherheitssystem (20) nach Anspruch 2, wobei die Verfolgungseinheit ferner ein Übermittlungsmittel zum Übermitteln eines Instruktionssignals zu der Einheit (26, 54) umfasst;
wobei das Fahrzeugeinheitsempfängermittel (32) dafür ausgelegt ist, das Instruktionssignal zu empfangen; und
wobei die Fahrzeugeinheit (26, 54) dafür ausgelegt ist, in einer vorbestimmten Weise auf das Instruktionssignal zu reagieren.

16. Sicherheitssystem (20) nach einem der vorangehenden Ansprüche, wobei das Sicherheitssystem ferner ein Positionsspeichermittel umfasst, welches dafür ausgelegt ist, die bestimmte Position des Fahrzeugs (22, 60) in regelmäßigen Zeit- und/oder Entfernungsabständen zu speichern.

17. Fahrzeug (22, 60), umfassend das Sicherheitssystem (20) nach einem der vorangehenden Ansprüche.

18. Verfahren zum Betreiben eines Sicherheitssystems (20) für ein Fahrzeug (22, 60), wobei das Sicherheitssystem ein Sicherheitssystem nach einem der vorangehenden Ansprüche umfasst; wobei das Verfahren die folgenden Schritte umfasst:
Bestimmen des Standortes des Fahrzeugs (22, 60) unter Verwendung eines Positionsbestimmungsmittels (34);
Empfangen und Speichern der bestimmten Position des Fahrzeugs (22, 60) in der Nutzerberechtigungseinheit (24, 50);
Übermitteln eines Abfragesignals von der Einheit (26, 54);
beim Empfang des Abfragesignals Erzeugen des Berechtigungssignals von der Nutzerberechtigungseinheit (24, 50);
wobei die Einheit (26, 54) bestimmt, dass, wenn ein zuvor programmierter Zustand erfasst wird und die Einheit nicht das Berechtigungssignal empfangen hat, eine nicht berechtigte Person eine nicht berechtigte Aktion durchführt; und
wobei die Einheit (26, 54) ein Signal übermittelt, dass den bestimmten Standort des Fahrzeugs (22, 60) identifiziert und anzeigt, dass die nicht berechtigte Aktion auftritt.

19. Verfahren zum Betreiben eines Sicherheitssystems nach Anspruch 19, wobei die möglichen, zuvor programmierten Zustände umfassen
(i) Bewegung des Fahrzeugs (22, 60),
(ii) Betrieb des Fahrzeugs
(iii) Erfassen einer Person in oder in der Nähe des Fahrzeugs, und/oder
(iv) Aktivierung der Nutzerberechtigungseinheit (24, 50) durch einen Nutzer zum Übermitteln eines Signals, das zeigt, dass sich der Nutzer in einer Notlage befindet.

## Revendications

1. Système de sécurité (20) pour un véhicule (22, 60), comportant une unité d'autorisation d'utilisateur (24, 50) pour reconnaître qu'une personne est un utilisateur autorisé dudit véhicule, et une unité de véhicule (26, 54) située en relation fixe avec ledit véhicule,
ladite unité d'autorisation d'utilisateur (24, 50) comportant un dispositif générateur de signal d'autorisation (28) pour générer un signal d'autorisation, et un dispositif émetteur de signal d'autorisation (30) pour émettre ledit signal d'autorisation ; et
ladite unité de véhicule (26, 54) comportant un dispositif récepteur de signal (32) pour recevoir ledit signal d'autorisation, un dispositif de détermination de position (34) pour déterminer la position dudit véhicule (22, 60), un dispositif émetteur de position (36) pour émettre un signal indiquant la position déterminée dudit véhicule, et des dispositifs détecteurs (64, 68, 70) pour détecter si une action prédéterminée est effectuée sur ledit véhicule ; et un dispositif de commande pour actionner ledit dispositif émetteur de position (36) pour émettre un signal indiquant la position déterminée dudit véhicule (22, 60) si ladite action prédéterminée a été effectuée en l'absence dudit signal d'autorisation,
**caractérisé en ce que** ladite unité de véhicule (26, 54) comporte en outre un dispositif générateur de signal d'interrogation pour générer un signal interrogateur et un dispositif émetteur de signal d'interrogation pour émettre ledit signal d'interrogation ; et
ladite unité d'autorisation d'utilisateur (24, 50) comporte un dispositif récepteur de signal d'interrogation pour recevoir ledit signal d'interrogation, le dispositif de génération de signal d'autorisation (28) étant adapté pour générer ledit signal d'autorisation à la réception dudit signal d'interrogation par ledit récepteur de signal d'interrogation,
dans lequel ledit dispositif émetteur de signal d'interrogation de ladite unité de véhicule (26, 54) est adapté pour émettre un signal identifiant la position déterminée du véhicule (22, 60) ; le dispositif récepteur de signal d'autorisation de ladite unité d'autorisation d'utilisateur (24, 50) est adapté pour recevoir ledit signal d'identification de position déterminée ; et ladite unité d'autorisation d'utilisateur comporte en outre un dispositif de mémoire de position pour enregistrer ladite position déterminée dudit véhicule.

2. Système de sécurité (20) selon la revendication 1, comportant en outre une unité de poursuite située à distance dudit véhicule (22, 60) pour surveiller l'état et la position dudit véhicule, ladite unité de poursuite comportant un dispositif récepteur de position pour recevoir ladite position déterminée et un dispositif pour agir d'une manière prédéterminée à la réception dudit signal d'autorisation.

3. Système de sécurité (20) selon la revendication 1 ou la revendication 2, dans lequel ledit dispositif de détermination de position (34) comporte un Système Mondial de Localisation (GPS) (62) pour déterminer la position du véhicule (22, 60) à partir des temps de parcours de signaux provenant de satellites.

4. Système de sécurité (20) selon l'une quelconque des revendications ci-dessus, dans lequel ledit dispositif émetteur de positon (36) et/ou ledit dispositif récepteur de position comporte des unités de téléphone mobile.

5. Système de sécurité (20) selon l'une quelconque des revendications ci-dessus, dans lequel ledit dispositif générateur de signal d'autorisation (28) est adapté pour générer un signal de type à code de brassage.

6. Système de sécurité (20) selon l'une quelconque des revendications ci-dessus, dans lequel lesdits dispositifs détecteurs (64, 68, 70) comprennent une unité de mémoire pour enregistrer ladite position déterminée à intervalles réguliers, le dispositif d'actionnement étant adapté pour actionner l'émetteur (36) en vue d'émettre un signal indiquant la position déterminée dudit véhicule (22, 60) si les dispositifs détecteurs détectent que la position déterminée effective a changé par rapport à la position déterminée enregistrée en l'absence dudit signal d'autorisation.

7. Système de sécurité (20) selon l'une quelconque des revendications ci-dessus, dans lequel lesdits dispositifs détecteurs (64, 68, 70) sont adaptés pour surveiller un système de gestion du moteur du véhicule (22, 60) et détecter si un moteur commandé par ledit système de gestion du moteur est actionné.

8. Système de sécurité (20) selon l'une quelconque des revendications ci-dessus, dans lequel lesdits dispositifs détecteurs (64, 68, 70) comportent un détecteur passif à infrarouge (68) pour détecter si une personne se trouve dans ledit véhicule (22, 60) ou à proximité de celui-ci.

9. Système de sécurité (20) selon l'une quelconque des revendications ci-dessus, dans lequel lesdits dispositifs détecteurs (64, 68, 70) comportent un détecteur à ultrasons pour détecter si une personne se trouve dans ledit véhicule (22, 60) ou à proximité de celui-ci.

10. Système de sécurité (20) selon l'une quelconque des revendications ci-dessus, dans lequel lesdits dispositifs détecteurs (64, 68, 70) comprennent une caméra CCD (70) pour enregistrer une image d'une personne se trouvant dans ledit véhicule (22, 60) ou à proximité de celui-ci.

11. Système de sécurité (20) selon l'une quelconque des revendications ci-dessus, dans lequel ladite unité d'autorisation d'utilisateur (24, 50) comporte en outre un dispositif d'actionnement et d'émission d'alarme (52), pour actionnement par un utilisateur en vue d'émettre un signal vers ladite unité de véhicule (26, 54), indiquant que ledit utilisateur est en difficulté,
ladite unité de véhicule étant en outre adaptée pour recevoir ledit signal de difficulté, ledit dispositif d'actionnement étant adapté pour actionner ledit dispositif émetteur de position (36) en vue d'émettre un signal indiquant la position déterminée dudit véhicule (22, 60) si ledit signal de difficulté a été reçu.

12. Système de sécurité (20) selon la revendication 4, dans lequel ladite unité de véhicule (26, 54) comporte en outre un microphone et un haut-parleur pour permettre l'utilisation desdites unités de téléphone mobile comme un téléphone classique par l'utilisateur dudit véhicule (22, 60).

13. Système de sécurité (20) selon l'une quelconque des revendications ci-dessus, dans lequel ladite unité de véhicule (26, 54) comporte en outre un dispositif d'entrée (72) pour la commande et la reprogrammation des fonctions de l'unité de véhicule.

14. Système de sécurité (20) selon la revendication 13, dans lequel ledit dispositif d'entrée (72) comprend un assistant numérique personnel avec un écran tactile.

15. Système de sécurité (20) selon la revendication 2, dans lequel la dite unité de poursuite comporte en outre un dispositif émetteur pour émettre un signal d'instruction à ladite unité de véhicule (26, 54) ;
ledit dispositif récepteur de signal (32) de l'unité de véhicule est adapté pour recevoir ledit signal d'instruction ; et
ladite unité de véhicule (26, 54) est adaptée pour répondre de manière prédéterminée audit signal d'instruction.

16. Système de sécurité (20) selon n'importe laquelle des autres revendications, dans lequel ledit système de sécurité comporte en outre un dispositif d'enregistrement de position adapté pour enregistrer la position déterminée dudit véhicule (22, 60) à intervalles réguliers de temps et/ou de distance.

17. Véhicule (22, 60) incorporant le système de sécurité (20) comme revendiqué dans l'une quelconque des revendications ci-dessus.

18. Procédé pour faire fonctionner un système de sécurité (20) pour un véhicule (22, 60), le système de sécurité comportant un système de sécurité comme revendiqué dans l'une quelconque des revendications ci-dessus ; le procédé comportant les étapes consistant à
déterminer l'emplacement du véhicule (22, 60) à l'aide du dispositif de détermination de position (34) ;
recevoir et enregistrer la position déterminée du véhicule (22, 60) au niveau de l'unité d'autorisation d'utilisateur (24, 50) ;
émettre un signal d'interrogation à partir de l'unité de véhicule (26, 54) ;
à la réception du signal d'interrogation, générer le signal d'autorisation à partir de l'unité d'autorisation d'utilisateur (24, 50) ;
déterminer via l'unité de véhicule (26, 54) que si une condition préprogrammée a été détectée et que l'unité de véhicule n'a pas reçu le signal d'autorisation, alors une personne non autorisée effectue une action non autorisée ; et
émettre via l'unité de véhicule (26, 54) un signal identifiant la position déterminée du véhicule (22, 60) et indiquant qu'une action non autorisée se produit.

19. Procédé pour faire fonctionner un système de sécurité selon la revendication 19, dans lequel les conditions préprogrammées possibles comprennent
(i) le mouvement du véhicule (22, 60),
(ii) le fonctionnement du véhicule,
(iii) la détection d'une personne dans, sur ou à proximité du véhicule et/ou
(iv) l'activation de l'unité d'autorisation d'utilisateur (24, 50) par un utilisateur pour émettre un signal identifiant l'utilisateur comme étant en difficulté.
